# EUROPEAN PATENT SPECIFICATION

(11) **EP 3 543 556 B1**
(45) Date of publication and mention of the grant of the patent: **22.12.2021**
(21) Application number: 17870970.5
(22) Date of filing: 14.11.2017
(51) Int. Cl.: F16D 25/10, F16H 3/093, B60K 6/38, F16D 21/06, F16D 25/0638

(54) **TRIPLE CLUTCH AND ACTUATOR THEREOF**
DREIFACHKUPPLUNG UND STELLGLIED DAFÜR
TRIPLE EMBRAYAGE ET ACTIONNEUR CORRESPONDANT

(30) Priority: 15.11.2016 KR 20160151653
(43) Date of publication of application: 25.09.2019
(73) Proprietor: C-Stone Technologies Co., Ltd, Suwon-si, Gyeonggi-do 16229 (KR)
(72) Inventor: PARK, Dong-Hoon, Seongnam-si Gyeonggi-do 13600 (KR)
(74) Representative: Maikowski & Ninnemann Patentanwälte Partnerschaft mbB
(86) International application number: PCT/KR2017/012841
(87) International publication number: WO 2018/093108

(56) References cited:
- EP-A1- 2 287 487
- EP-A1- 3 322 606
- DE-A1-102011 117 781
- DE-A1-102013 006 858
- JP-A- 2009 107 388
- JP-B2- 5 195 513
- KR-A- 20050 115 639
- KR-A- 20160 035 326
- KR-A- 20160 073 234
- US-A1- 2007 214 903

## Description

### [Technical Field]

The present invention relates to a triple clutch and an actuator thereof, and more particularly, to a triple clutch and an actuator thereof which are capable of being applied to a dual clutch transmission of a hybrid vehicle.

### [Background Art]

Recently, vehicle makers make great efforts to develop environmentally-friendly vehicles in order to meet regulations related to the environment and fuel economy. Recently, researches on dual clutch transmissions (DCT), which may be applied to the environmentally-friendly vehicles, are being actively conducted. The DCT is a transmission having a new concept in which two clutches are applied to a manual transmission structure to improve efficiency of the transmission and improve driving convenience.

Meanwhile, examples of the environmentally-friendly vehicles may include an electric vehicle (EV) and a hybrid electric vehicle (HEV) that use electrical energy. The hybrid vehicle means a vehicle that travels by using two or more types of power sources. Typically, an engine and a motor are used as the power sources for a hybrid vehicle, the motor is directly connected to the transmission, and the engine is connected to the transmission through an engine clutch. In the case in which the transmission used for the hybrid vehicle is the DCT, all of the three clutches need to be disposed at front and rear sides of the motor, which causes a problem that an overall length of the transmission is increased.

The above information disclosed in this Background section is only for enhancement of understanding of the background of the invention and therefore it may contain information that does not form the prior art that is already known in this country to a person of ordinary skill in the art.

Document EP 3 322 606 A1 discloses a hybrid module for a motor vehicle, comprising an electric machine which has a stator and a rotor, a double clutch which has a first and second component clutch and is configured to couple the hybrid module to a transmission of the motor vehicle such that it can be disconnected, and a separating clutch which is configured to couple an internal combustion engine of the motor vehicle to the hybrid module such that it can be disconnected, wherein the double clutch and the separating clutch are arranged radially and axially within the rotor, wherein the first and the second component clutch are arranged behind one another in the axial direction, and the separating clutch is arranged closer in the radial direction to the rotational axis of the rotor than the double clutch.

### [DISCLOSURE]

### [Technical Problem]

The present invention has been made in an effort to provide a triple clutch in which three clutches used for a dual clutch transmission of a hybrid vehicle are efficiently disposed, thereby realizing a compact transmission structure.

The present invention has also been made in an effort to provide an actuator capable of effectively operating the triple clutch.

### [Technical Solution]

A claimed solution is specified by a triple clutch according to claim 1. Accordingly the triple clutch including: an input shaft which receives rotational power of an engine; a motor which includes a motor housing, a stator fixedly mounted on an outer circumferential surface of the motor housing, and a rotor rotatably disposed at a radially inner side of the stator; a clutch housing which is operatively connected to the rotor, receives rotational power of the motor while rotating together with the rotor, and has therein a clutch space; a first clutch which selectively transmits rotational power of the clutch housing to a first output shaft; a second clutch which selectively transmits the rotational power of the clutch housing to a second output shaft; and a third clutch which selectively transmits rotational power of the input shaft to the clutch housing, in which all of the first, second, and third clutches are disposed in the clutch space.

The first, second, and third clutches may include first, second, and third disc packs, respectively, and at least some of the first, second, and third disc packs may be disposed in an axial direction within a length of the rotor.

The first and second clutches may be disposed in parallel in an axial direction, and the third clutch may be disposed at radially inner sides of the first and second clutches.

The first clutch may include a first disc pack which selectively and operatively connects the first output shaft and the clutch housing by axial force, and a drum which selectively applies the axial force to the first disc pack, the second clutch may include a second disc pack which selectively and operatively connects the second output shaft and the clutch housing by axial force, the drum may be operatively connected to the clutch housing and may continuously receive the rotational power of the clutch housing, and the second disc pack may selectively and operatively connect the second output shaft and the drum.

The motor housing may include a motor housing outer circumferential portion which extends in an axial direction and has an inner circumferential surface to which the stator is fixedly attached, a motor housing connecting portion which extends radially inward from a front end of the motor housing outer circumferential portion, and a motor housing inner circumferential portion which extends from an inner end of the motor housing connecting portion toward a rear side in the axial direction, and the clutch housing may include a clutch housing outer circumferential portion which extends in the axial direction and has an outer circumferential surface to which the rotor is fixedly attached, a clutch housing connecting portion which extends radially inward from a front end of the clutch housing outer circumferential portion and is spaced apart from the motor housing connecting portion in the axial direction, and a clutch housing inner circumferential portion which extends in the axial direction from an inner end of the clutch housing connecting portion and is spaced apart from the motor housing inner circumferential portion in a radial direction.

The first clutch may include: a first operating hub which is operatively connected to the first output shaft; a first disc pack which is mounted between the clutch housing outer circumferential portion and the first operating hub and selectively and operatively connects the clutch housing and the first operating hub by axial force; a drum which is operatively connected to an inner circumferential surface of the clutch housing outer circumferential portion and selectively applies the axial force to the first disc pack while moving in the axial direction; and a first pressure plate which applies the axial force to the drum.

The second clutch may include: a second operating hub which is operatively connected to the second output shaft; a second disc pack which is mounted between the drum and the second operating hub and selectively and operatively connects the drum and the second operating hub by axial force; and a second pressure plate which selectively applies the axial force to the second disc pack while moving in the axial direction.

The first pressure plate may be mounted on an inner circumferential surface of the drum so as to be movable in the axial direction together with the drum, and the second pressure plate may be coupled, by means of splines, to the inner circumferential surface of the drum so as to be movable in the axial direction independently of the drum.

The first pressure plate may be disposed at an axially rear side of the second pressure plate.

The third clutch may include: a third operating hub which is operatively connected to the input shaft; a third disc pack which is mounted between the third operating hub and the clutch housing inner circumferential portion and selectively and operatively connects the clutch housing and the third operating hub by axial force; and a third pressure plate which selectively applies the axial force to the third disc pack while moving in the axial direction.

The third pressure plate may penetrate the clutch housing connecting portion and apply the axial force to the third disc pack.

Another exemplary embodiment of the present invention provides a triple clutch including: an input shaft which receives rotational power of an engine; a motor which includes a motor housing, a stator fixedly mounted on an outer circumferential surface of the motor housing, and a rotor rotatably disposed at a radially inner side of the stator; a clutch housing which is operatively connected to the rotor, receives rotational power of the motor while rotating together with the rotor, and has therein a clutch space; a first clutch which selectively transmits rotational power of the clutch housing to a first output shaft; a second clutch which selectively transmits the rotational power of the clutch housing to a second output shaft; and a third clutch which selectively transmits rotational power of the input shaft to the clutch housing, in which the first, second, and third clutches include first, second, and third disc packs, respectively, and at least some of the first, second, and third disc packs are disposed in an axial direction within a length of the rotor.

In one embodiment, the clutch housing may include a first support portion configured to support the first clutch in the axial direction, the first, second, and third clutches may include first, second, and third operating hubs, respectively, the second operating hub may include a second operating hub extension portion that extends toward a rear side in the axial direction, the axial force applied to the first clutch may be transmitted to the clutch housing and supported by a first support bearing disposed at the front side in the axial direction between the clutch housing and the motor housing, the axial force applied to the second clutch may be transmitted to the second operating hub, transmitted to a second support bearing through a snap ring mounted on the second operating hub extension portion, and supported by the second supporting bearing, and the axial force applied to the third clutch may be transmitted to the clutch housing through a snap ring mounted on an inner circumferential surface of the clutch housing, and supported by a third support bearing disposed at the rear side in the axial direction between the clutch housing and the motor housing.

In another embodiment, the clutch housing may include a first support portion configured to support the first clutch in the axial direction, the first, second, and third clutches may include first, second, and third operating hubs, respectively, the second operating hub may be coupled, by means of spline, to a second output shaft and coupled by a snap ring mounted on the second output shaft, the axial force applied to the first clutch may be transmitted to the clutch housing and supported by a first support bearing disposed at the front side in the axial direction between the clutch housing and the motor housing, the axial force applied to the second clutch may be transmitted to the second operating hub, transmitted to the second output shaft by the snap ring mounted on the second output shaft, transmitted to and supported by a second support bearing mounted on the output shaft, and the axial force applied to the third clutch may be transmitted to the clutch housing through a snap ring mounted on an inner circumferential surface of the clutch housing, and supported by a third support bearing disposed at the rear side in the axial direction between the clutch housing and the motor housing.

The triple clutch further comprises an actuator.

The actuator transmits axial force to the first clutch, the second clutch, or the third clutch.

The actuator comprises: a first piston which transmits the axial force to the first clutch; a second piston which transmits the axial force to the second clutch; and a third piston which transmits the axial force to the third clutch, the first piston and the second piston are provided in an actuator housing, and the third piston is mounted in a motor housing.

According to the invention, the first piston and the second piston are separated by a partition wall disposed between the first piston and the second piston, and an outer circumferential surface of the second piston is positioned to be closer to a radially outer side of a piston space in which the first piston and the second piston are mounted than an inner circumferential surface of the first piston.

According to the invention, the partition wall includes: a partition wall mounting portion which is mounted in the actuator housing, extends toward a front side, that is a side close to the input shaft, in the axial direction, and is slidably in contact with an outer end of the second piston; a partition wall connecting portion which extends radially inward from a front end of the partition wall mounting portion; and a partition wall extension portion which extends from an inner end of the partition wall connecting portion toward the front side in the axial direction and is slidably in contact with an inner circumferential surface of the first piston.

A first support plate may be mounted on the partition wall extension portion at a front side of the first piston, a first return spring may be mounted between the first support plate and a front surface of the first piston, and a second return spring may be mounted between a front surface of the second piston and the partition wall connecting portion.

The motor housing may include a motor housing outer circumferential portion which extends in an axial direction and has an inner circumferential surface to which the stator is fixedly attached, a motor housing connecting portion which extends radially inward from a front end of the motor housing outer circumferential portion, and a motor housing inner circumferential portion which extends from an inner end of the motor housing connecting portion toward a rear side in the axial direction, the motor housing connecting portion may further include first and second protruding portions which are spaced radially apart from each other and extend toward the rear side in the axial direction, and the third piston may be mounted in a space between the first and second protruding portions.

A second support plate may be mounted on an inner circumferential surface of the first protruding portion, and a third return spring may be mounted between the second support plate and a rear surface of the third piston.

### [Advantageous Effects]

According to the exemplary embodiment of the present invention, the three clutches, which are required for the hybrid vehicle mounted with the DCT, are disposed in the rotor of the motor, such that it is possible to improve efficiency in using a space, and thus to reduce an overall length of the transmission.

In addition, the piston for operating the three clutches is efficiently configured / disposed, and as a result, it is possible to implement the actuator which is compact and may acquire high operating force.

Other effects, which may be obtained or expected by the exemplary embodiments of the present invention, will be directly or implicitly disclosed in the detailed description on the exemplary embodiments of the present invention as in the appended claims.

That is, various effects expected according to the exemplary embodiments of the present invention as in the appended claims will be disclosed in the detailed description to be described below.

### [Description of the Drawings]

FIG. 1 is a cross-sectional view of a triple clutch according to an exemplary embodiment of the present invention.
FIG. 2 is a cross-sectional view of a triple clutch according to another exemplary embodiment of the present invention.
FIG. 3 is a schematic view illustrating a state in which three clutches of the triple clutch according to the exemplary embodiment of the present invention are disposed.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention as in the appended claims.

A part irrelevant to the description will be omitted to clearly describe the present invention, and the same or similar constituent elements will be designated by the same reference numerals throughout the specification.

In the following description, dividing names of components into first, second and the like is to divide the names because the names of the components are the same as each other and an order thereof is not particularly limited.

In addition, a 'front side', a 'front portion', a 'front end', or a 'front end portion' indicates a 'side', a 'portion', or an 'end' close to an input shaft, and a 'rear side', a 'rear portion', a 'rear end', or a 'rear end portion' indicates a 'side', a 'portion', or an 'end' distant from the input shaft.

For example, a triple clutch according to an exemplary embodiment of the present invention may be used for a hybrid vehicle that uses a DCT. The hybrid vehicle means a vehicle that travels by using two or more power sources. In the present specification, the hybrid vehicle, which uses an engine and a motor as power sources, will be described as an example. In addition, the hybrid vehicle, in which the motor is directly connected to a dual clutch transmission and the engine is selectively connected to the dual clutch transmission through the clutch, will be described as an example.

In the dual clutch transmission, multiple input gears are distributed and disposed on two transmission input shafts, and multiple output gears, which engage with the multiple input gears, are distributed and disposed on two transmission output shafts. In addition, the dual clutch transmission includes multiple synchronizer mechanisms, and the multiple synchronizer mechanisms selectively operate to connect one of the multiple output gears and one of the two transmission output shafts. In addition, the dual clutch is configured to transmit power of the power sources (e.g., the engine and the motor) to any one of the two transmission output shafts. A dry or wet clutch may be used as the dual clutch.

Meanwhile, it should be understood that in the present specification and the claims, the input shaft and the first and second output shafts are related to a flow of power in terms of a triple clutch. That is, the input shaft means a shaft that inputs rotational power of the engine to the triple clutch, and the input shaft may be a crank shaft of the engine or a separate shaft connected to the crank shaft. The output shaft means a shaft that outputs rotational power in the triple clutch, and the output shaft may be a transmission input shaft.

In addition, a configuration in which two members are operatively connected means a configuration in which one member is connected to the other member so as to transmit rotational power to the other member, that is, means a configuration in which the two members are connected to each other by means of welding, bolting, riveting, spline engagement, or gear engagement so as to be rotatable together.

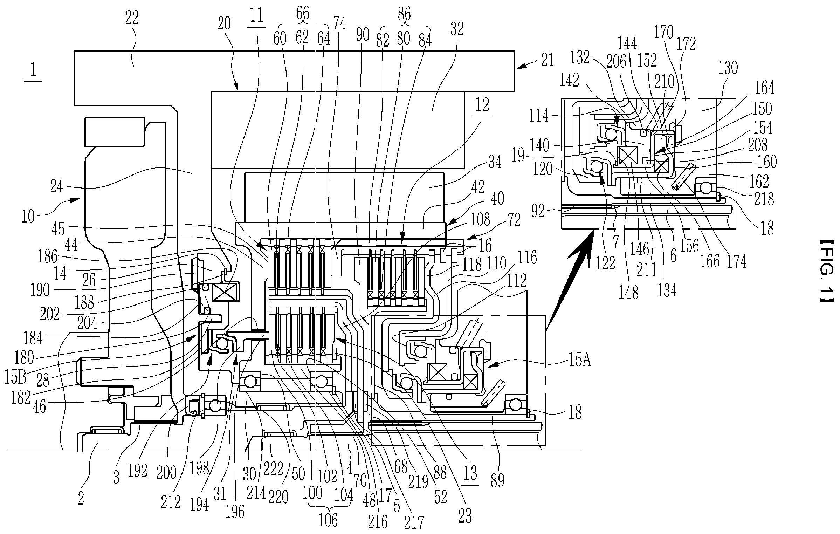

FIG. 1 is a cross-sectional view of a triple clutch according to an exemplary embodiment of the present invention.

As illustrated in FIG. 1, a triple clutch 1 according to an exemplary embodiment of the present invention is configured to selectively receive rotational power of an input shaft 2 and selectively transmit the rotational power of the input shaft 2 and/or a motor 20 to a first output shaft 4 or a second output shaft 6. The triple clutch 1 includes the input shaft 2, the motor 20, a clutch housing 40, a first clutch 11, a second clutch 12, a third clutch 13, and actuators 15A and 15B. The first clutch 11, the second clutch 12, the third clutch 13, and the actuators 15A and 15B are disposed in a transmission housing. The transmission housing is formed in a generally cylindrical shape having a space therein.

The input shaft 2, the first output shaft 4, and the second output shaft 6 are disposed at a central portion in the transmission housing. Here, any one of the first output shaft 4 and the second output shaft 6 relates to implementation of odd-numbered gear shift stages (e.g., a first stage, a third stage, a fifth stage, and a seventh stage), and the other of the first output shaft 4 and the second output shaft 6 relates to implementation of even-numbered gear shift stages (e.g., a second stage, a fourth stage, a sixth stage, and an eighth stage). That is, the rotational power of the input shaft 2 and/or the motor 20 is selectively transmitted to the first output shaft 4 or the second output shaft 6 by an operation of the first clutch 11 or the second clutch 12, such that the odd-numbered gear shift stages and the even-numbered gear shift stages are alternately implemented, thereby performing a gear shift operation.

In addition, an engine mode (an operation mode in which the vehicle travels only by using power of the engine) or a hybrid mode (an operation mode in which the vehicle travels by using power of the engine and power of the motor) may be implemented as the rotational power of the input shaft 2 is inputted to the triple clutch 1 by the operation of the third clutch 13. An electric vehicle mode (an operation mode in which the vehicle travels only by using power of the motor) may be implemented when the third clutch 13 does not operate.

The input shaft 2 is configured to input the rotational power of the power source (e.g., the engine) to the triple clutch 1 and may be the crank shaft or a separate shaft connected to the crank shaft. In the present exemplary embodiment, a shaft, which is connected to the crank shaft through a torsional damper 10, is described as an example of the input shaft 2, but the input shaft 2 is not limited to this shaft. Input shaft splines 3 are formed in the input shaft 2, such that the input shaft 2 may be operatively connected to the crank shaft or the torsional damper 10 connected to the crank shaft.

The first output shaft 4 and the second output shaft 6 may be two input shafts provided in the dual clutch transmission. The second output shaft 6 is formed as a hollow shaft, and the first output shaft 4 is disposed in the second output shaft 6 without rotational interference with the second output shaft 6. In addition, a front end portion of the first output shaft 4 protrudes from a front end portion of the second output shaft 6 toward a front side in an axial direction and extends to an end portion of the input shaft 2. A bearing 222 is disposed between the end portion of the input shaft 2 and the front end portion of the first output shaft 4 so as to allow the input shaft 2 and the first output shaft 4 to smoothly rotate relative to each other. Splines 5 or gear teeth are formed in an outer circumferential surface of the front end portion of the first output shaft 4, and splines 7 or gear teeth are also formed in an outer circumferential surface of the front end portion of the second output shaft 6, but the present invention is not limited thereto.

The torsional damper 10 is configured to attenuate torsional vibration of the rotational power transmitted from the crank shaft, and an output of the torsional damper 10 is transmitted to the input shaft 2.

The motor 20 includes a motor housing 21, a stator 32, and a rotor 34.

The motor housing 21 may be a part of the transmission housing, and the motor housing 21 may be manufactured separately from the transmission housing and then coupled to the transmission housing. The motor housing 21 includes a motor housing outer circumferential portion 22, a motor housing connecting portion 24, and a motor housing inner circumferential portion 30.

The motor housing outer circumferential portion 22 extends from the front side toward the rear side in the axial direction.

The motor housing connecting portion 24 extends radially inward from a front end of the motor housing outer circumferential portion 22. The motor housing connecting portion 24 further includes first and second protruding portions 26 and 28 which are spaced apart from each other in a radial direction and extend toward the rear side in the axial direction.

The motor housing inner circumferential portion 30 extends from an inner end of the motor housing connecting portion 24 toward the rear side in the axial direction. A motor housing stepped portion 31 is formed on an outer circumferential surface of the motor housing inner circumferential portion 30. The motor housing inner circumferential portion 30 is spaced radially outward apart from the input shaft 2, and bearings 212 and 220 are mounted between an inner circumferential surface of the motor housing inner circumferential portion 30 and an outer circumferential surface of the input shaft 2 so as to allow the motor housing 21 and the input shaft 2 to smoothly rotate relative to each other. In addition, at a front side of the bearing 212, a sealing member 200 is mounted between the inner circumferential surface of the motor housing inner circumferential portion 30 and the outer circumferential surface of the input shaft 2 so as to prevent oil supplied to the triple clutch from leaking to the outside.

With the aforementioned shape, the motor housing 21 defines a space for mounting the stator 32, the rotor 34, and the clutches. However, the shape of the motor housing 21 may be determined in accordance with design intention of those skilled in the art and is not limited to the shape described and illustrated in the present specification and the drawings.

The stator 32 is fixedly mounted on an inner circumferential surface of the motor housing outer circumferential portion 22. The stator 32 is electrically connected to an inverter (not illustrated) and receives an electrical signal. Therefore, the stator 32 forms a magnetic field therein.

The rotor 34 is disposed in the stator 32 so as to be spaced radially inward apart from the stator 32, and the rotor 34 is formed in a cylindrical shape. The rotor 34 rotates when an electrical signal is inputted to the stator 32.

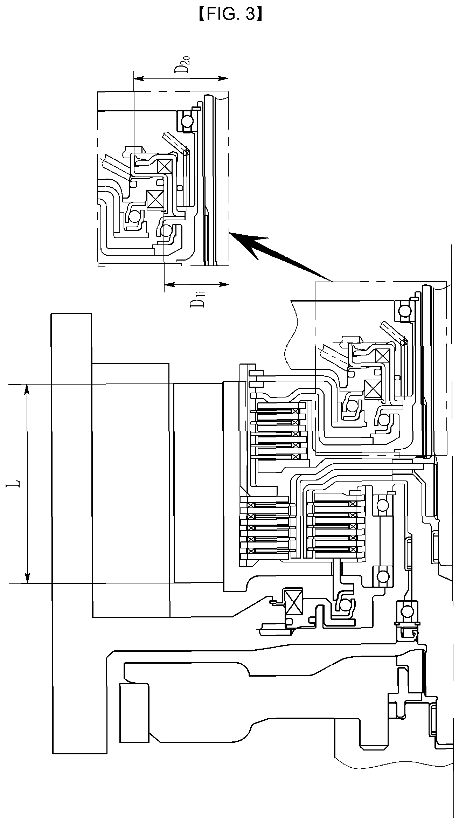

The clutch housing 40 defines a clutch space in which the first, second, and third clutches 11, 12, and 13 are disposed. The clutch housing 40 is operatively connected to the rotor so as to be rotated together with the rotor and receives the rotational power of the motor 20. As illustrated in FIG. 3, the first, second, and third clutches 11, 12, and 13 are disposed in the clutch space, particularly, in a space within a length L of the rotor 34 in the axial direction, such that a compact structure may be implemented. The clutch housing 40 includes a clutch housing outer circumferential portion 42, a clutch housing connecting portion 44, and a clutch housing inner circumferential portion 48.

The clutch housing outer circumferential portion 42 extends from the front side toward the rear side in the axial direction, and an outer circumferential surface of the clutch housing outer circumferential portion 42 is fixedly attached to an inner circumferential surface of the rotor 34. Therefore, when the rotor 34 rotates, the clutch housing 40 also rotates together with the rotor 34.

The clutch housing connecting portion 44 extends radially inward from a front end of the clutch housing outer circumferential portion 42, and the clutch housing connecting portion 44 is spaced apart from the motor housing connecting portion 24 toward the rear side in the axial direction. A first support portion 45, which protrudes toward the rear side in the axial direction, and a through hole 46, which is formed in the axial direction, may be formed at predetermined positions of the clutch housing connecting portion 44.

The clutch housing inner circumferential portion 48 extends in the axial direction from an inner end of the clutch housing connecting portion 44, and the clutch housing inner circumferential portion 48 is spaced radially outward apart from the motor housing inner circumferential portion 30. A first clutch housing stepped portion 50, which faces the motor housing stepped portion 31, is formed on a front portion of an inner circumferential surface of the clutch housing inner circumferential portion 48. A first support bearing 214 is mounted between the motor housing stepped portion 31 and the first clutch housing stepped portion 50. In addition, a second clutch housing stepped portion 52 is formed on a rear portion of the inner circumferential surface of the clutch housing inner circumferential portion 48.

Meanwhile, the shape of the clutch housing 40 may be determined in accordance with design intention of those skilled in the art and is not limited to the shape described and illustrated in the present specification and the drawings.

The first clutch 11 is disposed at an outer side in the radial direction and a front side in the axial direction inside the clutch space. The first clutch 11 is configured to selectively transmit the rotational power of the input shaft 2 and/or the motor 20 to the first output shaft 4 and includes a first disc pack 66, a first operating hub 68, a drum 72, and a first pressure plate 110.

The first disc pack 66 is disposed between the clutch housing 40 and the first operating hub 68 and selectively transmits the rotational power of the clutch housing 40 to the first operating hub 68. The first support portion 45 formed on the clutch housing connecting portion 44 supports the first disc pack 66 in the axial direction so that the first disc pack 66 frictionally engages with the first support portion 45. The first disc pack 66 includes first separating plates 60, first friction discs 62, and first separating springs 64. The first separating spring 64 may be omitted as necessary, but the present invention is not limited thereto.

The multiple first separating plates 60 are coupled, by means of splines, to an inner circumferential surface of the clutch housing outer circumferential portion 42.

The multiple first friction discs 62 are coupled, by means of splines, to an outer circumferential surface of the first operating hub 68, and the multiple first friction discs 62 and the multiple first separating plates 60 are alternately disposed.

One or more of the first separating springs 64 are disposed at radially outer sides of the first friction discs 62 and between the neighboring first separating plates 60 and provide axial elastic force to the first separating plates 60. The first separating springs 64 maintain intervals between the first separating plates 60 when the first clutch 11 is disengaged, thereby reducing drag torque and allowing the first clutch 11 to be smoothly released. In particular, in the present exemplary embodiment, when axial force applied to the first disc pack 66 is eliminated, the first separating springs 64 may act as return springs to release the first clutch 11.

The first operating hub 68 transmits the rotational power of the clutch housing 40, which is transmitted through the first disc pack 66, to the first output shaft 4. Splines 70 or gear teeth are formed in an inner circumferential surface of the first operating hub 68 and engage with the splines 5 or gear teeth of the first output shaft 4 so as to transmit power. A bearing 217 is interposed between a radially inner portion of the first operating hub 68 and a rear end portion of the input shaft 2, allows the first operating hub 68 and the input shaft 2 to smoothly rotate relative to each other, and supports the first operating hub 68 in the axial direction.

The drum 72 is formed in a cylindrical shape and coupled to the inner circumferential surface of the clutch housing outer circumferential portion 42 by means of spline engagement so as to be rotatable in the axial direction. The drum 72 rotates together with the clutch housing 40 and receives the rotational power of the clutch housing 40. The drum 72 is disposed at a rear side of the first disc pack 66 and extends toward the rear side in the axial direction. A first pressing portion 74 is formed on a front end portion of the drum 72 so as to transmit the axial force to the first disc pack 66.

The first pressure plate 110 is coupled to a rear portion of the drum 72. In the present specification and the drawings, an outer end of the first pressure plate 110 is coupled, by means of splines, to an inner circumferential surface of the drum 72, and snap rings 16, which are fixedly mounted on the inner circumferential surface of the drum 72, are disposed at front and rear sides at the outer end of the first pressure plate 110, such that the first pressure plate 110 and the drum 72 move together in the axial direction. However, the coupling between the first pressure plate 110 and the drum 72 is not limited thereto. A first accommodating portion 112 is formed at an inner end of the first pressure plate 110 so as to accommodate a first application bearing 114. The shape of the first pressure plate 110 may be determined in accordance with design intention of those skilled in the art and is not limited to the shape described and illustrated in the present specification and the drawings.

The second clutch 12 is disposed at the outer side in the radial direction and at the rear side in the axial direction inside the clutch space. The second clutch 12 is configured to selectively transmit the rotational power of the input shaft 2 and/or the motor 20 to the second output shaft 6 and includes a second disc pack 86, a second operating hub 88, and a second pressure plate 116.

The second disc pack 86 is disposed between the drum 72 and the second operating hub 88 and selectively transmits the rotational power of the drum 72 to the second operating hub 88. In addition, the second disc pack 86 is disposed between the first pressing portion 74 and the first pressure plate 110 in the axial direction. The second disc pack 86 includes second separating plates 80, second friction discs 82, and second separating springs 84. The second separating spring 84 may be omitted as necessary, but the present invention is not limited thereto.

The multiple second separating plates 80 are coupled, by means of splines, to an outer circumferential surface of the second operating hub 88.

The multiple second friction discs 82 are coupled, by means of splines, to an inner circumferential surface of the drum 72, and the multiple second friction discs 82 and the multiple second separating plates 80 are alternately disposed.

One or more of the second separating springs 84 are disposed at radially inner sides of the second friction discs 82 and between the neighboring second separating plates 80 and provide axial elastic force to the second separating plates 80. The second separating springs 84 maintain intervals between the second separating plates 80 when the second clutch 12 is disengaged, thereby reducing drag torque and allowing the second clutch 12 to be smoothly released. In particular, in the present exemplary embodiment, when axial force applied to the second disc pack 86 is eliminated, the second separating springs 84 may act as return springs to release the second clutch 12.

The second operating hub 88 transmits the rotational power of the drum 72, which is transmitted through the second disc pack 86, to the second output shaft 6. A second operating hub extension portion 89 extends from an inner diameter portion of the second operating hub 88 toward the rear side in the axial direction. At least a part of the second operating hub extension portion 89 may be spaced radially apart from the second output shaft 6. In addition, splines 92 or gear teeth are formed in an inner circumferential surface at a front end of the second operating hub extension portion 89 and engage with the splines 7 or gear teeth of the second output shaft 6 so as to transmit rotational power. A bearing 219 is interposed between a radially inner portion of the second operating hub 88 and a radially inner portion of the first operating hub 68, allows the second operating hub 88 and the first operating hub 68 to smoothly rotate relative to each other, and supports the second operating hub 88 in the axial direction. In addition, a second support portion 90 extends from a front side of the outer circumferential surface of the second operating hub 88 toward the outer side in the radial direction. The second support portion 90 supports the second disc pack 86 in the axial direction. Therefore, when the second pressure plate 116 moves to the left based on the drawings, the second support portion 90 supports the second separating plates 80 and the second friction discs 82 so that the axial force may be applied to the second separating plates 80 and the second friction discs 82.

The second pressure plate 116 selectively and frictionally engages with the second disc pack 86 so as to selectively transmit the rotational power of the drum 72 to the second operating hub 88. At a rear side of the second disc pack 86, the second pressure plate 116 is coupled, by means of splines, to the inner circumferential surface of the drum 72 so as to be movable in the axial direction. In addition, a second pressing portion 118 for pressing the second disc pack 86 may be formed on a radially outer portion of the second pressure plate 116. In addition, a second accommodating portion 120 is formed at a radially inner end of the second pressure plate 116, and the second accommodating portion 120 is configured to accommodate a second application bearing 122. The second pressure plate 116 is disposed at an axially front side of the first pressure plate 110. The shape of the second pressure plate 116 may be determined in accordance with design intention of those skilled in the art and is not limited to the shape described and illustrated in the present specification and the drawings.

The third clutch 13 is disposed at a radially inner side and an axially front side of the first disc pack 66 inside the clutch space. The third clutch 13 is configured to selectively transmit the rotational power of the input shaft 2 to the clutch housing 40 and includes a third operating hub 108, a third disc pack 106, and a third pressure plate 194.

The third operating hub 108 is operatively connected to the input shaft 2 by welding or the like, and the third operating hub 108 rotates together with the input shaft 2 and receives the rotational power of the input shaft 2.

The third disc pack 106 is disposed between the third operating hub 108 and the clutch housing inner circumferential portion 48 and selectively transmits the rotational power of the input shaft 2 to the clutch housing 40. The third disc pack 106 includes third separating plates 100, third friction discs 102, and third separating springs 104. The third separating spring 104 may be omitted as necessary, but the present invention is not limited thereto.

The multiple third separating plates 100 are coupled, by means of splines, to an outer circumferential surface of the clutch housing inner circumferential portion 48.

The multiple third friction discs 102 are coupled, by means of splines to an inner circumferential surface of the third operating hub 108, and the multiple third friction discs 102 and the multiple third separating plates 100 are alternately disposed.

One or more of the third separating springs 104 are disposed at radius inner sides of the third friction discs 102 and between the neighboring third separating plates 100 and provide axial elastic force to the third separating plates 100. The third separating springs 104 maintain intervals between the third separating plates 100 when the third clutch 13 is disengaged, thereby reducing drag torque and allowing the third clutch 13 to be smoothly released. In particular, in the present exemplary embodiment, when axial force applied to the third disc pack 106 is eliminated, the third separating springs 104 may act as return springs to release the third clutch 13.

In addition, a snap ring 23 is mounted on the clutch housing inner circumferential portion 48 at the rear side of the third disc pack 106, thereby supporting the third disc pack 106 in the axial direction. Therefore, when the third pressure plate 194 moves to the right based on the drawings, the snap ring 23 supports the third separating plates 100 and the third friction discs 102 so that the axial force may be applied to the third separating plates 100 and the third friction discs 102.

The third pressure plate 194 selectively and frictionally engages with the third disc pack 106 so as to selectively transmit the rotational power of the input shaft 2 to the clutch housing 40. The third pressure plate 194 penetrates a through hole 46 from the outside of the clutch housing 40 and extends to the third disc pack 106. A third pressing portion 196 is formed at a rear end of the third pressure plate 194. The third pressing portion 196 may apply the axial force to the third separating plate 100 to frictionally couple the third separating plate 100 and the third friction disc 102. In addition, a third accommodating portion 198 is formed at a front end portion of the third pressure plate 194, and the third accommodating portion 198 is configured to accommodate a third application bearing 192. The shape of the third pressure plate 194 may be determined in accordance with design intention of those skilled in the art and is not limited to the shape described and illustrated in the present specification and the drawings.

The actuators 15A and 15B are configured to provide operating force (axial force) to the triple clutch 1 and include a first / second actuator 15Aand a third actuator 15B. The first / second actuator 15A is configured to operate the first and second clutches 11 and 12 and includes an actuator housing 130. The actuator housing 130 is formed in the form of a thick circular plate and may be formed integrally with the transmission housing, or the actuator housing 130 may be manufactured separately from the transmission housing and then attached to the transmission housing. An inner diameter portion of the actuator housing 130 is recessed toward the rear side in the axial direction, thereby defining a piston space in which first and second pistons 140 and 160 are mounted. To this end, first and second clutch housing protruding portions 132 and 134, which extend toward the front side in the axial direction, are formed at a radially outer side and a radially inner side of the piston space, respectively. The second clutch housing protruding portion 134 is spaced radially apart from the second operating hub extension portion 89.

A second support bearing 218 is mounted between a rear end portion of an inner circumferential surface of the actuator housing 130 and a rear end portion of the second operating hub extension portion 89. A snap ring 18 is mounted on an outer circumferential surface of the second operating hub extension portion 89 in order to support the second support bearing 218 in the axial direction.

The first piston 140, a partition wall 150, and the second piston 160 are mounted in the piston space.

The first piston 140 is configured to provide the axial force to the first pressure plate 110 through the first application bearing 114, and the second piston 160 is configured to provide the axial force to the second pressure plate 116 through the second application bearing 122.

The first piston 140 is disposed in a radial space between an inner circumferential surface of the first clutch housing protruding portion 132 and the partition wall 150. The first application bearing 114 is mounted between a front surface of the first piston 140 and the first accommodating portion 112.

The second piston 160 is disposed in a radial space between the partition wall 150 and the second clutch housing protruding portion 134. In addition, a second piston inner circumferential portion 162 extends from an inner end of the second piston 160 toward the front side in the axial direction, and the second application bearing 122 is mounted between a front end of the second piston inner circumferential portion 162 and the second accommodating portion 120.

The partition wall 150 is disposed between the first piston 140 and the second piston 160, such that an operation of the first piston 140 and an operation of the second piston 160 may be independently controlled. The partition wall 150 includes a partition wall mounting portion 152, a partition wall connecting portion 154, and a partition wall extension portion 156.

The partition wall mounting portion 152 is formed in the axial direction and mounted on the inner circumferential surface of the first clutch housing protruding portion 132 by press-fitting or the like.

The partition wall connecting portion 154 extends radially inward from a front end of the partition wall mounting portion 152.

The partition wall extension portion 156 extends from an inner end of the partition wall connecting portion 154 toward the front side in the axial direction.

A first support plate 148 is mounted on a front end portion of the partition wall extension portion 156, and a first return spring 146 is mounted between the first support plate 148 and a front surface of the first piston 140 so as to provide elastic force to the first piston 140. A snap ring 19 is mounted on the partition wall extension portion 156 in order to support the first support plate 148 in the axial direction. In addition, a second return spring 166 is mounted between a front surface of the second piston 160 and the partition wall connecting portion 154 so as to provide elastic force to the second piston 160.

An outer circumferential surface of the first piston 140 is in close contact with an inner circumferential surface of the first clutch housing protruding portion 132, and an inner circumferential surface of the first piston 140 is in close contact with an outer circumferential surface of the partition wall extension portion 156, such that a first piston chamber 144 is formed between a rear surface of the first piston 140 and the partition wall connecting portion 154. In addition, a stopper 142, which protrudes radially outward, is formed at a front end portion of the outer circumferential surface of the first piston 140 and restricts a distance that the first piston 140 moves toward the rear side in the axial direction.

An outer circumferential surface of the second piston 160 is in close contact with an inner circumferential surface of the partition wall mounting portion 152, and an inner circumferential surface of the second piston 160 is in close contact with an outer circumferential surface of the second clutch housing protruding portion 134, such that a second piston chamber 164 is formed by a rear surface of the second piston 160 and the actuator housing 130.

The first piston 140 is operatively connected to the first application bearing 114 and configured to apply axial force to the first application bearing 114 while being moved toward the front side in the axial direction by operating hydraulic pressure supplied to the first piston chamber 144. To maintain leakproof sealability of the first piston chamber 144, a sealing member 206 may be mounted between the outer circumferential surface of the first piston 140 and the inner circumferential surface of the first clutch housing protruding portion 132, and a sealing member 208 may be mounted between the inner circumferential surface of the first piston 140 and the outer circumferential surface of the partition wall extension portion 156.

The second piston inner circumferential portion 162 extends toward the front side in the axial direction and is operatively connected to the second application bearing 122. Therefore, the second piston 160 is configured to apply axial force to the second application bearing 122 while being moved toward the front side in the axial direction by operating hydraulic pressure supplied to the second piston chamber 164. To maintain leakproof sealability of the second piston chamber 164, a sealing member 210 may be mounted between the outer circumferential surface of the second piston 160 and the inner circumferential surface of the partition wall mounting portion 152, and a sealing member 211 may be mounted between the inner circumferential surface of the second piston 160 and the outer circumferential surface of the second clutch housing protruding portion 134.

Meanwhile, with the shape of the partition wall 150, an outer circumferential surface D_{2O} of the second piston 160 is positioned to be closer to a radially outer side than is an inner circumferential surface D₁ᵢ of the first piston 140 (see FIG. 3). Therefore, with the partition wall 150, the operations of the first and second pistons 140 and 160 may be independently controlled, and hydraulic pressure applying areas (pressure receiving areas) of the first and second pistons 140 and 160 are increased, such that high operating force may be obtained even in a small space. For this reason, it is possible to design a compact actuator capable of obtaining high operating force.

A first supply flow path 170 configured to supply operating hydraulic pressure to the first piston chamber 144 and a second supply flow path 172 configured to supply operating hydraulic pressure to the second piston chamber 164 are formed in the actuator housing 130. The first supply flow path 170 fluidly communicates with the first piston chamber 144, and the second supply flow path 172 fluidly communicates with the second piston chamber 164. In addition, a cooling flow path 174 is formed in the actuator housing 130, such that it is possible to supply cooling and lubricating oil into the triple clutch 1.

The third actuator 15B further includes a third piston 180. The third piston 180 is configured to provide axial force to the third pressure plate 194 through the third application bearing 192. The third piston 180 is disposed in a radial space between the first and second protruding portions 26 and 28 of the motor housing 21. A rear surface of the third piston 180 extends radially inward, thereby defining a third piston extension portion 182. A third application bearing 192 is mounted between the third piston extension portion 182 and the third accommodating portion 198 of the third pressure plate 194. An outer circumferential surface of the third piston 180 is in close contact with an inner circumferential surface of the first protruding portion 26, and an inner circumferential surface of the third piston 180 is in close contact with an outer circumferential surface of the second protruding portion 28, such that a third piston chamber 184 is formed between a front surface of the third piston 180 and the motor housing connecting portion 24. In addition, to maintain leakproof sealability of the third piston chamber 184, a sealing member 202 is mounted between the outer circumferential surface of the third piston 180 and the inner circumferential surface of the first protruding portion 26, and a sealing member 204 is mounted between the inner circumferential surface of the third piston 180 and the outer circumferential surface of the second protruding portion 28.

A second support plate 188 is mounted on a rear surface of the first protruding portion 26, and a third return spring 186 is mounted between a rear surface of the third piston 180 and the second support plate 188 so as to provide elastic force to the third piston 180. In addition, a snap ring 14 is mounted on the first protruding portion 26 in order to support the second support plate 188 in the axial direction.

In addition, a third supply flow path 190 configured to supply operating hydraulic pressure to the third piston chamber 184 is formed in the motor housing 21, and the third supply flow path 190 fluidly communicates with the third piston chamber 184.

Meanwhile, the third actuator 15B is formed integrally with the motor housing 21, or the third actuator 15B is manufactured separately from the motor housing 21 and then attached to the motor housing 21.

A third support bearing 216 is mounted between the second clutch housing stepped portion 52 and a rear end portion of the motor housing inner circumferential portion 30. A snap ring 17 is formed on the motor housing inner circumferential portion 30 in order to support the third support bearing 216 in the axial direction.

Hereinafter, an operation of the triple clutch according to the exemplary embodiment of the present invention will be described in detail.

The power of the crank shaft (or the engine) is inputted to the input shaft 2 after torsional vibration of the power is attenuated by the torsional damper 10, or the power is directly inputted to the input shaft 2. The rotational power of the input shaft 2 is transmitted to the third operating hub 108. However, the rotational power is not transmitted to the clutch housing 40 when the third clutch 13 does not operate.

In this state, when the operating hydraulic pressure is supplied to the third piston chamber 184 through the third supply flow path 190, the third piston 180 moves to the right based on the drawings and pushes the third application bearing 192 to the right based on the drawings. In this case, the third pressure plate 194 is moved to the right based on the drawings by the third application bearing 192 and applies axial force to the third separating plate 100. Therefore, the third separating plates 100 and the third friction discs 102 are frictionally coupled, and the rotational power of the input shaft 2 is transmitted to the clutch housing 40 through the third operating hub 108. Therefore, the operating mode (e.g., the engine mode or the hybrid mode) in which the power of the engine is used may be implemented.

When the operating hydraulic pressure supplied to the third piston chamber 184 disappears in this state, the third pressure plate 194 is moved to the left based on the drawings by the elastic force of the third separating spring 104. In addition, the third piston 180 is moved to the left based on the drawings by the elastic force of the third return spring 186 and the elastic force of the third separating spring 104 which is transmitted to the third piston 180 through the third application bearing 192. Therefore, the operating hydraulic pressure supplied to the third piston chamber 184 is smoothly discharged, and the third clutch 13 is released. Therefore, it is possible to implement the operating mode (e.g., the electric vehicle mode) in which only the power of the motor is used.

Meanwhile, the rotational power of the motor 20 is transmitted to the clutch housing 40 mounted on the rotor 34. In addition, the rotational power of the clutch housing 40 is also transmitted to the drum 72. In this state, when the operating hydraulic pressure is supplied to the first piston chamber 144 through the first supply flow path 170, the first piston 140 moves to the left based on the drawings and pushes the first application bearing 114 to the left based on the drawings. In this case, the first pressure plate 110 is moved to the left based on the drawings by the first application bearing 114 and pushes the drum 72 to the left based on the drawings, such that the drum 72 applies the axial force to the first disc pack 66. Therefore, the first separating plates 60 and the first friction discs 62 are frictionally coupled, and the rotational power of the clutch housing 40 (i.e., the rotational power of the input shaft 2 and/or the motor 20) is outputted to the first output shaft 4 through the first operating hub 68. In this case, the drum 72 moves in the axial direction to the left based on the drawings, but the second pressure plate 116 and the second friction disc 82 do not move in the axial direction because the second pressure plate 116 and the second friction disc 82 are coupled, by means of splines to the drum 72. In addition, the second separating springs 84 disposed between the neighboring second separating plates 80 maintain the intervals between the second separating plates 80. Therefore, the second clutch 12 is maintained in a disengaged state.

When the operating hydraulic pressure supplied to the first piston chamber 144 disappears in this state, the first pressure plate 110 is moved to the right based on the drawings by the elastic force of the first separating spring 64. In addition, the first piston 140 is moved to the right based on the drawings by the elastic force of the first return spring 146 and the elastic force of the first separating spring 64 which is transmitted to the first pressure plate 110 through the first application bearing 114. Therefore, the operating hydraulic pressure supplied to the first piston chamber 144 is smoothly discharged, and the first clutch 11 is released.

Meanwhile, when the operating hydraulic pressure is supplied to the second piston chamber 164 through the second supply flow path 172, the second piston 160 moves to the left based on the drawings and pushes the second application bearing 122 to the left based on the drawings. The second pressure plate 116 is moved in the axial direction to the left based on the drawings by the second application bearing 122 and applies axial force to the second disc pack 86. Therefore, the second separating plates 80 and the second friction discs 82 are frictionally coupled, and the rotational power of the drum 72 (i.e., the rotational power of the input shaft 2 and/or the motor 20) is outputted to the second output shaft 6 through the second operating hub 88.

When the operating hydraulic pressure supplied to the second piston chamber 164 disappears in this state, the second pressure plate 116 is moved to the right based on the drawings by the elastic force of the second separating spring 84. In addition, the second piston 160 is moved to the right based on the drawings by the elastic force of the second return spring 166 and the elastic force of the second separating spring 84 which is transmitted to the second piston 160 through the second application bearing 122. Therefore, the operating hydraulic pressure supplied to the second piston chamber 164 is smoothly discharged, and the second clutch 12 is released.

Meanwhile, the axial force applied to the first clutch 11 (the force applied to the left based on the drawings) is transmitted to the clutch housing 40 through the first support portion 45, and the axial force is supported by the first support bearing 214. In addition, the axial force applied to the second clutch 12 (the force applied to the left based on the drawings) is transmitted to the second operating hub 88 through the second support portion 90 and transmitted to the second support bearing 218 through the snap ring 18 mounted on the second operating hub extension portion 89, and the axial force is supported by the second support bearing 218. Furthermore, the axial force applied to the third clutch 13 (the force applied to the right based on the drawings) is transmitted to the clutch housing 40 through the snap ring 23 mounted on the clutch housing inner circumferential portion 48, and the axial force is supported by the third support bearing 216. As described above, the three support bearings for supporting axial force applied to the three clutches are maximally distributed and disposed in the axial direction, and as a result, it is possible to maximize operational stability and durability of the triple clutch 1.

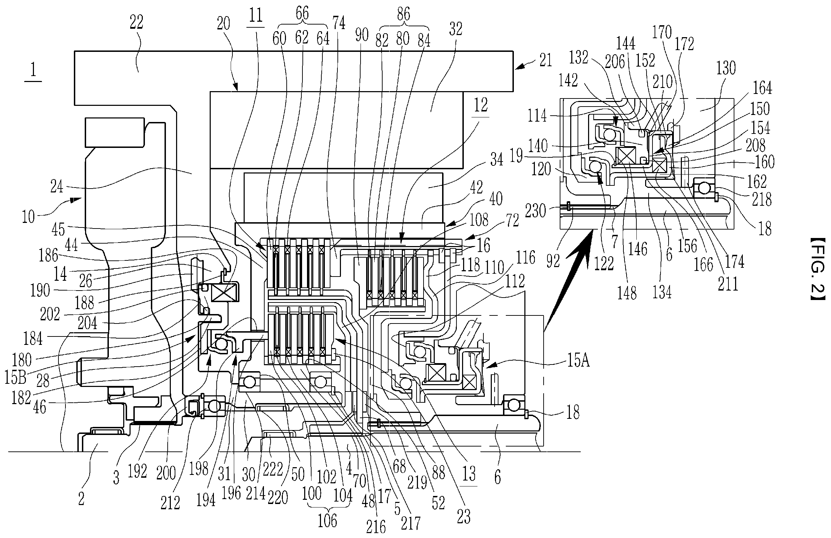

Hereinafter, a triple clutch according to another exemplary embodiment of the present invention will be described with reference to FIG. 2.

FIG. 2 is a cross-sectional view of the triple clutch according to another exemplary embodiment of the present invention.

Referring to the accompanying drawings, it can be seen that the triple clutch according to another exemplary embodiment of the present invention is significantly and entirely similar to the triple clutch according to the aforementioned exemplary embodiment of the present invention except for some constituent elements. Therefore, only different constituent elements will be described.

As illustrated in FIG. 2, according to another exemplary embodiment of the present invention, the second operating hub 88 and the second output shaft 6 are coupled by means of splines, and a snap ring 230 is disposed on the spline coupling portion, such that axial force applied to the second clutch 12 is transmitted to the second output shaft 6 through the snap ring 230. In addition, instead of the second operating hub extension portion 89, a second support bearing 218 is mounted on the second output shaft 6. That is, the second support bearing 218 is disposed between an outer circumferential surface of the second output shaft 6 and an inner circumferential surface at a rear end of the actuator housing 130 so as to support the axial force applied to the second clutch 12. For this reason, the second operating hub extension portion 89 may be omitted, and as a result, it is possible to implement the triple clutch 1 having a simpler structure.

Because the triple clutch according to another exemplary embodiment of the present invention is identical to the triple clutch according to the exemplary embodiment of the present invention except for the aforementioned constituent elements, a further description of the triple clutch according to another exemplary embodiment of the present invention will be described.

According to the triple clutch 1 according to the exemplary embodiments of the present invention, the first, second, and third clutches 11, 12, and 13 are disposed in the clutch housing 40, particularly, in the axial direction in the space within the length L of the rotor 34 of the motor 20, and as a result, it is possible to design a compact DCT for a hybrid vehicle.

Meanwhile, in a modified example, at least some of the first, second, and third disc packs 66, 86, and 106 may be disposed in the axial direction in the space within the length L of the rotor 34. Here, at least some of the first, second, and third disc packs 66, 86, and 106 mean all of the constituent elements that constitute the first, second, and third disc packs 66, 86, and 106, mean all of the constituent elements that constitute any two of the first, second, and third disc packs 66, 86, and 106 and some of the constituent elements that constitute the other of the first, second, and third disc packs 66, 86, and 106, mean all of the constituent elements that constitute any one of the first, second, and third disc packs 66, 86, and 106, some of the constituent elements that constitute another of the first, second, and third disc packs 66, 86, and 106, and some of the constituent elements that constitute the other of the first, second, and third disc packs 66, 86, and 106, or mean some of the constituent elements that constitute any one of the first, second, and third disc packs 66, 86, and 106, some of the constituent elements that constitute another of the first, second, and third disc packs 66, 86, and 106, and some of the constituent elements that constitute the other of the first, second, and third disc packs 66, 86, and 106. That is, all or some of the constituent elements constituting the first disc pack 66, all or some of the constituent elements constituting the second disc pack 86, and all or some of the constituent elements constituting the third disc pack 106 are disposed in the axial direction in the space within the length L of the rotor 34 of the motor 20, and as a result, it is possible to reduce an overall length of the DCT for a hybrid vehicle.

While this invention has been described in connection with what is presently considered to be practical exemplary embodiments, it is to be understood that the invention is not limited to the disclosed embodiments. On the contrary, it is intended to cover various modifications and equivalent arrangements included within the scope of the appended claims.

## Claims

1. A triple clutch (1) comprising: an input shaft (2) which receives rotational power of an engine;
a motor (20) which includes a motor housing (21), a stator (32) fixedly mounted on an outer circumferential surface of the motor housing (21), and a rotor (34) rotatably disposed at a radially inner side of the stator (32);
a clutch housing (40) which is operatively connected to the rotor (34), receives rotational power of the motor (20) while rotating together with the rotor (34), and has therein a clutch space;
a first clutch (11) which selectively transmits rotational power of the clutch housing (40) to a first output shaft (4);
a second clutch (12) which selectively transmits the rotational power of the clutch housing (40) to a second output shaft (6); and
a third clutch (13) which selectively transmits rotational power of the input shaft (2) to the clutch housing (40),
wherein all of the first, second, and third clutches (11, 12, 13) are disposed in the clutch space,
an actuator (15A, 15B) which transmits axial force to the first clutch (11), the second clutch (12), or the third clutch (13),
wherein the actuator (15A, 15B) comprises a first piston (140) which transmits the axial force to the first clutch (11), a second piston (160) which transmits the axial force to the second clutch (12), and a third piston (180) which transmits the axial force to the third clutch (13),
wherein the first piston (140) and the second piston (160) are provided in an actuator housing (130), and the third piston (180) is mounted in a motor housing (21),
wherein the first piston (140) and the second piston (160) are separated by a partition wall (150) disposed between the first piston (140) and the second piston (160), and an outer circumferential surface (D_{2O}) of the second piston (160) is positioned to be closer to a radially outer side of a piston space in which the first piston (140) and the second piston (160) are mounted than an inner circumferential surface (D₁ᵢ) of the first piston (140),
**characterized in that** the partition wall (150) includes:
a partition wall mounting portion (152) which is mounted in the actuator housing (130), extends toward a front side, that is a side close to the input shaft (2), in the axial direction, and is slidably in contact with an outer end of the second piston (160);
a partition wall connecting portion (154) which extends radially inward from a front end of the partition wall mounting portion (152); and
a partition wall extension portion (156) which extends from an inner end of the partition wall connecting portion (154) toward the front side in the axial direction and is slidably in contact with an inner circumferential surface of the first piston (140).

2. The triple clutch (1) of claim 1, wherein:
the first, second, and third clutches (11, 12, 13) include first, second, and third disc packs (66, 86, 106), respectively, and at least some of the first, second, and third disc packs (66, 86, 106) are disposed in an axial direction within a length of the rotor (34).

3. The triple clutch (1) of claim 1, wherein:
the first and second clutches (11, 12) are disposed in parallel in an axial direction, and the third clutch (13) is disposed at radially inner sides of the first and second clutches (11, 12).

4. The triple clutch (1) of claim 2, wherein:
the clutch housing (40) includes a first support portion (45) configured to support the first clutch (11) in the axial direction, the first, second, and third clutches (11, 12, 13) include first, second, and third operating hubs (68, 88, 108), respectively, the second operating hub (88) includes a second operating hub extension portion (89) that extends toward a rear side in the axial direction,
the axial force applied to the first clutch (11) is transmitted to the clutch housing (40) and supported by a first support bearing (214) disposed at the front side in the axial direction between the clutch housing (40) and the motor housing (21),
the axial force applied to the second clutch (12) is transmitted to the second operating hub (88), transmitted to a second support bearing (218) through a snap ring (18) mounted on the second operating hub extension portion (89), and supported by the second supporting bearing (218), and
the axial force applied to the third clutch (13) is transmitted to the clutch housing (40) through a snap ring (17) mounted on an inner circumferential surface of the clutch housing (40), and supported by a third support bearing (216) disposed at the rear side in the axial direction between the clutch housing (40) and the motor housing (21).

5. The triple clutch (1) of claim 2, wherein:
the clutch housing (40) includes a first support portion (45) configured to support the first clutch (11) in the axial direction, the first, second, and third clutches (11, 12, 13) include first, second, and third operating hubs (68, 88, 108), respectively, the second operating hub (88) is coupled, by means of spline, to a second output shaft (6) and coupled by a snap ring (230) mounted on the second output shaft (6),
the axial force applied to the first clutch (11) is transmitted to the clutch housing (40) and supported by a first support bearing (214) disposed at the front side in the axial direction between the clutch housing (40) and the motor housing (21),
the axial force applied to the second clutch (12) is transmitted to the second operating hub (88), transmitted to the second output shaft (6) by the snap ring (18) mounted on the second output shaft (6), transmitted to and supported by a second support bearing (218) mounted on the output shaft (6), and
the axial force applied to the third clutch (13) is transmitted to the clutch housing (40) through a snap ring (17) mounted on an inner circumferential surface of the clutch housing (40), and supported by a third support bearing (216) disposed at the rear side in the axial direction between the clutch housing (40) and the motor housing (21).

6. The triple clutch (1) of claim 1, wherein:
the first clutch (11) includes a first disc pack (66) which selectively and operatively connects the first output shaft (4) and the clutch housing (40) by axial force, and a drum (72) which selectively applies the axial force to the first disc pack (66),
the second clutch includes (12) a second disc pack (86) which selectively and operatively connects the second output shaft (6) and the clutch housing (40) by axial force,
the drum (72) is operatively connected to the clutch housing (40) and continuously receives the rotational power of the clutch housing (40), and
the second disc pack (86) selectively and operatively connects the second output shaft (6) and the drum (72).

7. The triple clutch (1) of claim 1, wherein:
the motor housing (21) includes a motor housing outer circumferential portion (22) which extends in an axial direction and has an inner circumferential surface to which the stator (32) is fixedly attached, a motor housing connecting portion (24) which extends radially inward from a front end of the motor housing outer circumferential portion (22), and a motor housing inner circumferential portion (30) which extends from an inner end of the motor housing connecting portion (24) toward a rear side in the axial direction, and
the clutch housing (40) includes a clutch housing outer circumferential portion (42) which extends in the axial direction and has an outer circumferential surface to which the rotor (34) is fixedly attached, a clutch housing connecting portion (44) which extends radially inward from a front end of the clutch housing outer circumferential portion (42) and is spaced apart from the motor housing connecting portion (24) in the axial direction, and a clutch housing inner circumferential portion (48) which extends in the axial direction from an inner end of the clutch housing connecting portion (44) and is spaced apart from the motor housing inner circumferential portion (24) in a radial direction.

8. The triple clutch (1) of claim 7, wherein:
the first clutch (11) includes:
a first operating hub (68) which is operatively connected to the first output shaft (4);
a first disc pack (66) which is mounted between the clutch housing outer circumferential portion (42) and the first operating hub (68) and selectively and operatively connects the clutch housing (40) and the first operating hub (68) by axial force;
a drum (72) which is operatively connected to an inner circumferential surface of the clutch housing outer circumferential portion (42) and selectively applies the axial force to the first disc pack (66) while moving in the axial direction; and
a first pressure plate (110) which applies the axial force to the drum (72).

9. The triple clutch (1) of claim 8, wherein:
the second clutch (12) includes:
a second operating hub (88) which is operatively connected to the second output shaft (6);
a second disc pack (86) which is mounted between the drum (72) and the second operating hub (88) and selectively and operatively connects the drum (72) and the second operating hub (88) by axial force; and
a second pressure plate (116) which selectively applies the axial force to the second disc pack (86) while moving in the axial direction.

10. The triple clutch (1) of claim 9, wherein:
the first pressure plate (110) is mounted on an inner circumferential surface of the drum (72) so as to be movable in the axial direction together with the drum (72), and
the second pressure plate (116) is coupled, by means of splines, to the inner circumferential surface of the drum (72) so as to be movable in the axial direction independently of the drum (72).

11. The triple clutch (1) of claim 7, wherein:
the third clutch (13) includes:
a third operating hub (108) which is operatively connected to the input shaft (2);
a third disc pack (106) which is mounted between the third operating hub (108) and the clutch housing inner circumferential portion (48) and selectively and operatively connects the clutch housing (40) and the third operating hub (108) by axial force; and
a third pressure plate (194) which selectively applies the axial force to the third disc pack (106) while moving in the axial direction.

12. The triple clutch (1) of claim 11, wherein:
the third pressure plate (194) penetrates the clutch housing connecting portion (44) and applies the axial force to the third disc pack (106).

## Patentansprüche

1. Dreifachkupplung (1) aufweisend:
eine Antriebswelle (2), die Drehkraft von einem Motor aufnimmt;
einen Motor (20), der ein Motorgehäuse (21), einen fest an einer äußeren Umfangsfläche des Motorgehäuses (21) montierten Stator (32) und einen auf einer radial inneren Seite des Stators (32) drehbar gelagerten Rotor (34) aufweist;
ein Kupplungsgehäuse (40), das mit dem Rotor (34) funktionsmäßig verbunden ist, während es sich zusammen mit dem Rotor (34) dreht Drehkraft von dem Motor (20) aufnimmt, und darin einen Kupplungsraum besitzt;
eine ersten Kupplung (11), die selektiv Drehkraft des Kupplungsgehäuses (40) zu einer ersten Abtriebswelle (4) überträgt;
eine zweiten Kupplung (12), die selektiv die Drehkraft des Kupplungsgehäuses (40) zu einer zweiten Abtriebswelle (6) überträgt; und
eine dritten Kupplung (13), die selektiv Drehkraft der Antriebswelle (2) zu dem Kupplungsgehäuse (40) überträgt,
wobei die erste, zweite und dritte Kupplung (11, 12, 13) alle in dem Kupplungsraum angeordnet sind,
einem Aktor (15A, 15B), der Axialkraft auf die erste Kupplung (11), die zweite Kupplung (12) oder die dritte Kupplung (13) überträgt,
wobei der Aktor (15A, 15B) einen ersten Kolben (140) umfasst, der die Axialkraft auf die erste Kupplung (11) überträgt, einen zweiten Kolben (160), der die Axialkraft auf die zweite Kupplung (12) überträgt, und einen dritten Kolben (180), der die Axialkraft auf die dritte Kupplung (13) überträgt,
wobei der erste Kolben (140) und der zweite Kolben (160) in einem Aktorgehäuse (130) vorgesehen sind und der dritte Kolben (180) in einem Motorgehäuse (21) montiert ist,
wobei der erste Kolben (140) und der zweite Kolben (160) durch eine zwischen dem ersten Kolben (140) und dem zweiten Kolben (160) angeordnete Trennwand (150) getrennt sind, und eine äußere Umfangsfläche (D₂ₒ) des zweiten Kolbens (160) näher bei einer radial äußeren Seite eines Kolbenraums, in dem der erste Kolben (140) und der zweite Kolben (160) montiert sind, positioniert ist als eine innere Umfangsfläche (D₁ᵢ) des ersten Kolbens (140),
**dadurch gekennzeichnet, dass** die Trennwand (150) aufweist:
einen Trennwandbefestigungsabschnitt (152), der in dem Aktorgehäuse (130) montiert ist, sich in axialer Richtung zu einer Vorderseite hin erstreckt, bei der es sich um eine Seite nahe bei der Antriebswelle (2) handelt, und verschieblich mit einem äußeren Ende des zweiten Kolbens (160) in Kontakt steht;
einen Trennwandverbindungsabschnitt (154), der sich von einem vorderen Ende des Trennwandbefestigungsabschnitts (152) radial nach innen erstreckt; und
einen Trennwandverlängerungsabschnitt (156), der sich von einem inneren Ende des Trennwandverbindungsabschnitts (154) in axialer Richtung zu der Vorderseite hin erstreckt und verschieblich mit einer inneren Umfangsfläche des ersten Kolbens (140) in Kontakt steht.

2. Dreifachkupplung (1) nach Anspruch 1, wobei:
die erste, zweite und dritte Kupplung (11, 12, 13) jeweils ein erstes, zweites und drittes Scheibenpaket (66, 86, 106) aufweist und wenigstens einige von dem ersten, zweiten und
dritten Scheibenpaket (66, 86, 106) in axialer Richtung innerhalb einer Länge des Rotors (34) angeordnet sind.

3. Dreifachkupplung (1) nach Anspruch 1, wobei:
die erste und die zweite Kupplung (11, 12) in axialer Richtung parallel angeordnet sind, und die dritte Kupplung (13) auf radial inneren Seiten der ersten und der zweiten Kupplung (11, 12) angeordnet ist.

4. Dreifachkupplung (1) nach Anspruch 2, wobei:
das Kupplungsgehäuse (40) einen ersten Tragabschnitt (45) aufweist, der dazu ausgebildet ist, die erste Kupplung (11) in axialer Richtung zu stützen, die erste, zweite und dritte Kupplung (11, 12, 13) jeweils eine erste, zweite und dritte Antriebsnabe (68, 88, 108) aufweisen und die zweite Antriebsnabe (88) einen Verlängerungsabschnitt (89) für die zweite Antriebsnabe aufweist, der sich in axialer Richtung zu einer Rückseite hin erstreckt,
die auf die erste Kupplung (11) aufgebrachte Axialkraft auf das Kupplungsgehäuse (40) übertragen wird und durch ein Traglager (214) abgestützt wird, das auf der Vorderseite in axialer Richtung zwischen dem Kupplungsgehäuse (40) und dem Motorgehäuse (21) angeordnet ist,
die auf die zweite Kupplung (12) übertragene Axialkraft auf die zweite Antriebsnabe (88) übertragen wird, durch einen auf dem Verlängerungsabschnitt (89) der zweiten Antriebsnabe gelagerten Sprengring (18) auf ein zweites Traglager (218) übertragen wird und durch das zweite Traglager (218) abgestützt wird, und
die auf die dritte Kupplung (13) aufgebrachte Axialkraft durch einen auf einer inneren Umfangsfläche des Kupplungsgehäuses (40) montierten Sprengring (17) auf das Kupplungsgehäuse (40) übertragen wird und durch ein auf der Rückseite in axialer Richtung zwischen dem Kupplungsgehäuse (40) und dem Motorgehäuse (21) angeordnetes drittes Traglager (216) abgestützt wird.

5. Dreifachkupplung (1) nach Anspruch 2, wobei:
das Kupplungsgehäuse (40) einen ersten Tragabschnitt (45) aufweist, der dazu ausgebildet ist, die erste Kupplung (11) in axialer Richtung zu stützen, die erste, zweite und dritte Kupplung (11, 12, 13) jeweils eine erste, zweite und dritte Antriebsnabe (68, 88, 108) aufweist, die zweite Antriebsnabe (88) mit Hilfe eines Splints mit einer zweiten Abtriebswelle (6) gekoppelt ist und durch einen auf der zweiten Abtriebswelle (6) montierten Sprengring (230) gekoppelt ist,
die auf die erste Kupplung (11) aufgebrachte Axialkraft auf das Kupplungsgehäuse (40) übertragen wird und durch ein erstes Traglager (214) abgestützt wird, das auf der Vorderseite in axialer Richtung zwischen dem Kupplungsgehäuse (40) und dem Motorgehäuse (21) angeordnet ist,
die auf die zweite Kupplung (12) aufgebrachte Axialkraft auf die zweite Antriebsnabe (88) übertragen wird, durch den auf der zweiten Abtriebswelle (6) montierten Sprengring (18) auf die zweite Abtriebswelle (6) übertragen wird, auf ein auf der Abtriebswelle (6) montiertes zweites Traglager (218) übertragen und davon abgestützt wird, und
die auf die dritte Kupplung (13) aufgebrachte Axialkraft durch einen auf einer inneren Umfangsfläche des Kupplungsgehäuses (40) montierten Sprengring (17) auf das Kupplungsgehäuse (40) übertragen wird und durch ein auf der Rückseite in axialer Richtung zwischen dem Kupplungsgehäuse (40) und dem Motorgehäuse (21) angeordnetes drittes Traglager (216) abgestützt wird.

6. Dreifachkupplung (1) nach Anspruch 1, wobei:
die erste Kupplung (11) ein erstes Scheibenpaket (66) aufweist, das die erste Abtriebswelle (4) und das Kupplungsgehäuse (40) durch Axialkraft selektiv und funktionsmäßig verbindet, und eine Trommel (72), die die Axialkraft selektiv auf das erste Scheibenpaket (66) aufbringt,
die zweite Kupplung (12) ein zweites Scheibenpaket (86) aufweist, das die zweite Abtriebswelle (6) und das Kupplungsgehäuse (40) durch Axialkraft selektiv und funktionsmäßig verbindet,
die Trommel (72) mit dem Kupplungsgehäuse (40) funktionsmäßig verbunden ist und kontinuierlich die Drehkraft des Kupplungsgehäuses (40) aufnimmt, und
das zweite Scheibenpaket (86) die zweite Abtriebswelle (6) und die Trommel (72) selektiv und funktionsmäßig verbindet.

7. Dreifachkupplung (1) nach Anspruch 1, wobei:
das Motorgehäuse (21) einen äußeren Umfangsabschnitt (22) des Motorgehäuses aufweist, der sich in axialer Richtung erstreckt und eine innere Umfangsfläche besitzt, an der der Stator (32) fest angebracht ist, einen Verbindungsabschnitt (24) des Motorgehäuses, der sich von einem vorderen Ende des äußeren Umfangsabschnitts (22) des Motorgehäuses radial nach innen erstreckt, und einen inneren Umfangsabschnitt (30) des Motorgehäuses, der sich von einem inneren Ende des Verbindungsabschnitts (24) des Motorgehäuses in axialer Richtung zu einer Rückseite hin erstreckt, und
das Kupplungsgehäuse (40) einen äußeren Umfangsabschnitt (42) des Kupplungsgehäuses aufweist, der sich in axialer Richtung erstreckt und eine äußere Umfangsfläche besitzt, an der der Rotor (34) fest angebracht ist, einen Verbindungsabschnitt (44) des Kupplungsgehäuses, der sich von einem vorderen Ende des äußeren Umfangsabschnitts (42) des Kupplungsgehäuses radial nach innen erstreckt und in axialer Richtung von dem Verbindungsabschnitt (24) des Motorgehäuses beabstandet ist, und einen inneren Umfangsabschnitt (48) des Kupplungsgehäuses, der sich in axialer Richtung von einem inneren Ende des Verbindungsabschnitts (44) des Kupplungsgehäuses erstreckt und in radialer Richtung von dem inneren Umfangsabschnitt (24) des Motorgehäuses beabstandet ist.

8. Dreifachkupplung (1) nach Anspruch 7, wobei:
die erste Kupplung (11) Folgendes aufweist:
eine erste Antriebsnabe (68), die mit der ersten Abtriebswelle (4) funktionsmäßig verbunden ist;
ein erstes Scheibenpaket (66), das zwischen dem äußeren Umfangsabschnitt (42) des Kupplungsgehäuses und der ersten Antriebsnabe (68) montiert ist und das Kupplungsgehäuse (40) und die erste Antriebsnabe (68) durch Axialkraft funktionsmäßig verbindet;
eine Trommel (72), die mit einer inneren Umfangsfläche des äußeren Umfangsabschnitts (42) des Kupplungsgehäuses funktionsmäßig verbunden ist und die Axialkraft selektiv auf das erste Scheibenpaket (66) aufbringt, während sie sich in axialer Richtung bewegt; und
eine erste Andrückplatte (110), die die Axialkraft auf die Trommel (72) aufbringt.

9. Dreifachkupplung (1) nach Anspruch 8, wobei:
die zweite Kupplung (12) Folgendes aufweist:
eine zweite Antriebsnabe (88), die mit der zweiten Abtriebswelle (6) funktionsmäßig verbunden ist;
ein zweites Scheibenpaket (86), das zwischen der Trommel (72) und der zweiten Antriebsnabe (88) montiert ist und die Trommel (72) und die zweite Antriebsnabe (88) durch Axialkraft selektiv und funktionsmäßig verbindet; und
eine zweite Andrückplatte (116), die die Axialkraft selektiv auf das zweite Scheibenpaket (86) aufbringt, während sie sich in axialer Richtung bewegt.

10. Dreifachkupplung (1) nach Anspruch 9, wobei:
die erste Andrückplatte (110) auf einer inneren Umfangsfläche der Trommel (72) montiert ist, um sich zusammen mit der Trommel (72) in axialer Richtung bewegen zu können, und
die zweite Andrückplatte (116) mit Hilfe von Splinten mit der inneren Umfangsfläche der Trommel (72) gekoppelt ist, um sich unabhängig von der Trommel (72) in axialer Richtung bewegen zu können.

11. Dreifachkupplung (1) nach Anspruch 7, wobei:
die dritte Kupplung Folgendes aufweist:
eine dritte Antriebsnabe (108), die mit der Antriebswelle (2) funktionsmäßig verbunden ist;
ein drittes Scheibenpaket (106), das zwischen der dritten Antriebsnabe (108) und dem inneren Umfangsabschnitt (48) des Kupplungsgehäuses montiert ist und das Kupplungsgehäuse (40) und die dritte Antriebsnabe (108) durch Axialkraft selektiv und funktionsmäßig verbindet; und
eine dritte Andrückplatte (194), die die Axialkraft selektiv auf das dritte Scheibenpaket (106) aufbringt, während sie sich in axialer Richtung bewegt.

12. Dreifachkupplung (1) nach Anspruch 11, wobei:
die dritte Andrückplatte (194) den Verbindungsabschnitt (44) des Kupplungsgehäuses durchdringt und die Axialkraft auf das dritte Scheibenpaket (106) aufbringt.

## Revendications

1. Embrayage triple (1) comprenant :
un arbre d'entrée (2) qui reçoit la puissance de rotation d'un moteur ;
un moteur (20) qui comprend un carter de moteur (21), un stator (32) monté de manière fixe sur une surface circonférentielle extérieure du carter de moteur (21), et un rotor (34) disposé de manière rotative sur un côté radialement intérieur du stator (32) ;
un carter d'embrayage (40) qui est relié fonctionnellement au rotor (34), reçoit la puissance de rotation du moteur (20) tout en tournant avec le rotor (34), et comporte un espace d'embrayage ;
un premier embrayage (11) qui transmet sélectivement la puissance de rotation du carter d'embrayage (40) à un premier arbre de sortie (4) ;
un deuxième embrayage (12) qui transmet sélectivement la puissance de rotation du carter d'embrayage (40) à un deuxième arbre de sortie (6) ; et
un troisième embrayage (13) qui transmet sélectivement la puissance de rotation de l'arbre d'entrée (2) au carter d'embrayage (40),
dans lequel tous les premier, deuxième et troisième embrayages (11, 12, 13) sont disposés dans l'espace d'embrayage,
un actionneur (15A, 15B) qui transmet une force axiale au premier embrayage (11), au deuxième embrayage (12) ou au troisième embrayage (13),
dans lequel l'actionneur (15A, 15B) comprend un premier piston (140) qui transmet la force axiale au premier embrayage (11), un deuxième piston (160) qui transmet la force axiale au deuxième embrayage (12), et un troisième piston (180) qui transmet la force axiale au troisième embrayage (13),
dans lequel le premier piston (140) et le deuxième piston (160) sont prévus dans un boîtier d'actionneur (130), et le troisième piston (180) est monté dans un carter de moteur (21),
dans lequel le premier piston (140) et le deuxième piston (160) sont séparés par une paroi de séparation (150) disposée entre le premier piston (140) et le deuxième piston (160), et
une surface circonférentielle extérieure (D₂ₒ) du deuxième piston (160) est positionnée pour être plus proche d'un côté radialement extérieur d'un espace de piston dans lequel le premier piston (140) et le deuxième piston (160) sont montés qu'une surface circonférentielle intérieure (D₁ᵢ) du premier piston (140),
**caractérisé en ce que** la paroi de séparation (150) comprend :
une partie de montage (152) du paroi de séparation qui est montée dans le boîtier d'actionneur (130), s'étend vers un côté avant, c'est-à-dire un côté proche de l'arbre d'entrée (2), dans la direction axiale, et est en contact coulissant avec une extrémité extérieure du deuxième piston (160) ;
une partie de connexion (154) du paroi de séparation qui s'étend radialement vers l'intérieur depuis une extrémité avant de la partie de montage (152) du paroi de séparation ; et
une partie d'extension (156) du paroi de séparation qui s'étend depuis une extrémité intérieure de la partie de connexion (154) du paroi de séparation vers le côté avant dans la direction axiale et est en contact coulissant avec une surface circonférentielle intérieure du premier piston (140).

2. Embrayage triple (1) selon la revendication 1, dans lequel :
les premier, deuxième et troisième embrayages (11, 12, 13) comprennent des premier, deuxième et troisième paquets de disques (66, 86, 106), respectivement, et au moins certains des premier, deuxième et troisième paquets de disques (66, 86, 106) sont disposés dans une direction axiale dans une longueur du rotor (34).

3. Embrayage triple (1) selon la revendication 1, dans lequel :
les premier et deuxième embrayages (11, 12) sont disposés en parallèle dans une direction axiale, et le troisième embrayage (13) est disposé au niveau de côtés radialement intérieurs des premier et deuxième embrayages (11, 12).

4. Embrayage triple (1) selon la revendication 2, dans lequel :
le carter d'embrayage (40) comprend une première partie de support (45) configurée pour supporter le premier embrayage (11) dans la direction axiale, les premier, deuxième et troisième embrayages (11, 12, 13) comprennent des premier, deuxième et troisième moyeux de fonctionnement (68, 88, 108), respectivement, le deuxième moyeu de fonctionnement (88) comprend une deuxième partie d'extension (89) du moyeu de fonctionnement qui s'étend vers un côté arrière dans la direction axiale,
la force axiale appliquée au premier embrayage (11) est transmise au carter d'embrayage (40) et supportée par un premier palier de support (214) disposé du côté frontal dans la direction axiale entre le carter d'embrayage (40) et le carter de moteur (21),
la force axiale appliquée au deuxième embrayage (12) est transmise au deuxième moyeu de fonctionnement (88), transmise à un deuxième palier de support (218) par l'intermédiaire d'un anneau élastique (18) monté sur la partie d'extension (89) du deuxième moyeu de fonctionnement, et supportée par le deuxième palier de support (218), et
la force axiale appliquée au troisième embrayage (13) est transmise au carter d'embrayage (40) par l'intermédiaire d'un anneau élastique (17) monté sur une surface circonférentielle intérieure du carter d'embrayage (40), et supporté par un troisième palier de support (216) disposé du côté arrière dans la direction axiale entre le carter d'embrayage (40) et le carter de moteur (21).

5. Embrayage triple (1) selon la revendication 2, dans lequel :
le carter d'embrayage (40) comprend une première partie de support (45) configurée pour supporter le premier embrayage (11) dans la direction axiale, les premier, deuxième et troisième embrayages (11, 12, 13) comprennent des premier, deuxième et troisième moyeux de fonctionnement (68, 88, 108), respectivement, le deuxième moyeu de fonctionnement (88) est couplé, au moyen de cannelures, à un deuxième arbre de sortie (6) et est couplé par un anneau élastique (230) monté sur le deuxième arbre de sortie (6),
la force axiale appliquée au premier embrayage (11) est transmise au carter d'embrayage (40) et supportée par un premier palier de support (214) disposé du côté avant dans la direction axiale entre le carter d'embrayage (40) et le boîtier de moteur (21),
la force axiale appliquée au deuxième embrayage (12) est transmise au deuxième moyeu de fonctionnement (88), transmise au deuxième arbre de sortie (6) par l'anneau élastique (18) monté sur le deuxième arbre de sortie (6), transmise à et supporté par un deuxième palier de support (218) monté sur l'arbre de sortie (6), et
la force axiale appliquée au troisième embrayage (13) est transmise au carter d'embrayage (40) par l'intermédiaire d'un anneau élastique (17) monté sur une surface circonférentielle intérieure du carter d'embrayage (40), et supporté par un troisième palier de support (216) disposé du côté arrière dans la direction axiale entre le carter d'embrayage (40) et le carter de moteur (21).

6. Embrayage triple (1) selon la revendication 1, dans lequel :
le premier embrayage (11) comprend un premier paquet de disques (66) qui relie sélectivement et fonctionnellement le premier arbre de sortie (4) et le carter d'embrayage (40) par une force axiale, et un tambour (72) qui applique sélectivement la force axiale au premier paquet de disques (66),
le deuxième embrayage (12) comprend un deuxième paquet de disques (86) qui relie sélectivement et fonctionnellement le deuxième arbre de sortie (6) et le carter d'embrayage (40) par une force axiale,
le tambour (72) est relié fonctionnellement au carter d'embrayage (40) et reçoit en continu la puissance de rotation du carter d'embrayage (40), et
le deuxième paquet de disques (86) relie sélectivement et fonctionnellement le deuxième arbre de sortie (6) et le tambour (72).

7. Embrayage triple (1) selon la revendication 1, dans lequel :
le carter de moteur (21) comprend une partie circonférentielle extérieure (22) du carter de moteur qui s'étend dans une direction axiale et présente une surface circonférentielle intérieure à laquelle le stator (32) est attaché de manière fixe, une partie de connexion (24) du carter de moteur qui s'étend radialement vers l'intérieur depuis une extrémité avant de la partie circonférentielle extérieure (22) du carter de moteur, et une partie circonférentielle intérieure (30) du carter de moteur qui s'étend depuis une extrémité intérieure de la partie de connexion (24) du carter de moteur vers un côté arrière dans la direction axiale, et
le carter d'embrayage (40) comprend une partie circonférentielle extérieure (42) du carter d'embrayage qui s'étend dans la direction axiale et présente une surface circonférentielle extérieure à laquelle le rotor (34) est attaché de manière fixe, une partie de connexion (44) du carter d'embrayage qui s'étend radialement vers l'intérieur depuis une extrémité avant de la partie circonférentielle extérieure (42) du carter d'embrayage et est espacée de la partie de connexion (24) du carter de moteur dans la direction axiale, et une partie circonférentielle intérieure (48) du carter d'embrayage qui s'étend dans la direction axiale depuis une extrémité intérieure de la partie de connexion (44) du carter d'embrayage et est espacée de la partie circonférentielle intérieure (24) du carter de moteur dans une direction radiale.

8. Embrayage triple (1) selon la revendication 7, dans lequel :
le premier embrayage (11) comprend :
un premier moyeu de fonctionnement (68) qui est relié fonctionnellement au premier arbre de sortie (4) ;
un premier paquet de disques (66) qui est monté entre la partie circonférentielle extérieure (42) du carter d'embrayage et le premier moyeu de fonctionnement (68) et qui relie sélectivement et fonctionnellement le carter d'embrayage (40) et le premier moyeu de fonctionnement (68) par une force axiale ;
un tambour (72) qui est relié fonctionnellement à une surface circonférentielle intérieure de la partie circonférentielle extérieure (42) du carter d'embrayage et applique sélectivement la force axiale au premier paquet de disques (66) tout en se déplaçant dans la direction axiale ; et
une première plaque de pression (110) qui applique la force axiale au tambour (72).

9. Embrayage triple (1) selon la revendication 8, dans lequel :
le deuxième embrayage (12) comprend :
un deuxième moyeu de fonctionnement (88) qui est relié fonctionnellement au deuxième arbre de sortie (6) ;
un deuxième paquet de disques (86) qui est monté entre le tambour (72) et le deuxième moyeu de fonctionnement (88) et qui relie sélectivement et fonctionnellement le tambour (72) et le deuxième moyeu de fonctionnement (88) par une force axiale ; et
une deuxième plaque de pression (116) qui applique sélectivement la force axiale au deuxième paquet de disques (86) tout en se déplaçant dans la direction axiale.

10. Embrayage triple (1) selon la revendication 9, dans lequel :
la première plaque de pression (110) est montée sur une surface circonférentielle intérieure du tambour (72) de manière à être mobile dans la direction axiale avec le tambour (72), et
la deuxième plaque de pression (116) est couplée, au moyen de cannelures, à la surface circonférentielle intérieure du tambour (72) de manière à être mobile dans la direction axiale indépendamment du tambour (72).

11. Embrayage triple (1) selon la revendication 7, dans lequel :
le troisième embrayage (13) comprend :
un troisième moyeu de fonctionnement (108) qui est relié fonctionnellement à l'arbre d'entrée (2) ;
un troisième paquet de disques (106), qui est monté entre le troisième moyeu de fonctionnement (108) et la partie circonférentielle intérieure (48) du carter d'embrayage et qui relie sélectivement et fonctionnellement le carter d'embrayage (40) et le troisième moyeu de fonctionnement (108) par une force axiale ; et
une troisième plaque de pression (194) qui applique sélectivement la force axiale au troisième paquet de disques (106) tout en se déplaçant dans la direction axiale.

12. Embrayage triple (1) selon la revendication 11, dans lequel :
le troisième plaque de pression (194) pénètre dans la partie de connexion (44) du carter d'embrayage et applique la force axiale sur le troisième paquet de disques (106).
